# EUROPEAN PATENT SPECIFICATION

(11) **EP 0 890 750 B1**
(45) Date of publication and mention of the grant of the patent: **06.10.2004**
(21) Application number: 98304735.8
(22) Date of filing: 16.06.1998
(51) Int. Cl.: F16B 5/06, B60R 13/02, B60N 3/04, F16B 33/00, F16B 37/04

(54) **Fastener with a seal**
Abdichtendes Befestigungselement
Elément de fixation comprenant un joint d'étanchéité

(30) Priority: 25.06.1997 DE 29711112 U
(43) Date of publication of application: 13.01.1999
(73) Proprietor: Newfrey LLC, Newark, Delaware 19711 (US)
(72) Inventor: Seng, Hans Peter, 35447 Reiskirchen/Bersrod (DE); Reindl, Johann, 35444 Biebertal-Fellingshausen (DE)
(74) Representative: Haar, Lucas H., Dipl.-Ing.

(56) References cited:
- DE-A- 19 532 360
- FR-A- 2 561 726
- FR-A- 2 670 253
- US-A- 5 419 606

## Description

The present invention relates to a fastener with a seal for fastening components on a structure.

In particular in the automotive industry, it is known to fix components, which may be connecting strips, floor carpets or interior linings, for example, to the body structure using fasteners. For this purpose, the body structure has an orifice through which a shank of the fastener extends.

Fasteners of this type are known, for example, from DE-A1-20 27 111. The fastener has a shank, which shank has a socket extending from one end face in the longitudinal direction of the shank. A fastening element, for example in the form of a screw nail, can be introduced for fixing the fastener on the structure. In the fastener known from DE-A1-20 27 111, the shank is slit in design so the shank is spread by insertion of the fastening element into the socket so that a portion of the shank comes to rest on an internal surface of the orifice in the body structure. As a result, on the one hand, the fastener is connected to the structure by a clamping effect, and, on the other hand, the orifice is sealed against incoming fluid by contact between the shank and the surface of the orifice. However, the sealing effect of such a fastening element is relatively restricted owing to the slit design of the fastener.

A development of the fastener known from DE-A1-20 27 111 is described in GM 75 18 877. This fastener has a closed shank and a sealing lip formed on a flange connected to the shank.

A fastener is also known from DE-A1-195 19 623 for fastener having a base body and a security device. The fastener engages partially in an orifice in the structure in which it is secured against axial removal by the security device. A sealing ring is formed beneath the base body. A tight connection between the fastener and a component on which the fastener is arranged is created by this design of the fastener. The sealing effect is dependent on the contact pressure, produced by the fastener, between the seal and a sealing face.

Document FR-A-2670253 discloses a fastener formed in two parts; a nut body for receiving a fastening element and a sealing body for attaching the nut body to a structure. A fastener is also disclosed by document FR-A-2561726, which fastener comprises the features of the pre-characterising portion of claim 1.

It is an object of the present invention to provide a generic fastener with which an improved sealing effect can be achieved.

The present invention provides a fastener of plastics material for fastening components on a structure, the fastener comprising an end face, a shank having a socket which extends from the end face in the longitudinal direction of the shank, and which is adapted to receive a fastening element extending into the socket, and a seal surrounding the shank and being formed by at least one portion of the shank adjacent to the end face, wherein the shank has an engagement region adapted to be located in an orifice formed in the structure, and at least one at least elastically deformable portion, characterised in that the shank has a peripheral bead on its external surface and in the portion forming the seal, the engagement region being formed between the bead and the end face, wherein by means of a force which acts in the direction of the engagement region and the portion is elastically deformable at least to such an extent that it forms the seal which faces toward the end face and surrounds the shank.

The design of the fastener according to the invention produces a secure and reliable seal. Possible production tolerances of the fastener and/or of the orifice within a structure do not affect the sealing effect as a sufficiently large sealing face or sealing bead can be achieved by the deformation of the portion.

The seal is preferably formed by at least one portion of the shank adjacent to the end face.

To achieve deformation of the portion of the shank with a relatively slight expenditure of force, it is preferred that the free cross section is greater in the portion forming the seal than in the following longitudinal portion of the socket as viewed in the longitudinal direction of the socket. In other words, the portion forming the seal has a smaller wall thickness than the remaining longitudinal portion of the socket.

To improve the sealing effect, it is preferred that the shank has a peripheral bead on its external surface and in the portion forming the seal. The sealing face of the seal is enlarged by the bead. The bead is preferably moulded on the shank. It can consist of relatively softly elastic material. It is not essential for the shank and the portion or the bead to consist of one material. Combinations of material are also possible.

To simplify production of the fastener, it is preferred that the bead and the shank are formed as one component.

To simplify the fitting of the fastener on a structure, it is preferred that the end face is formed at least in part by a head which is spaced from the seal. The head preferably has a greater cross section than the seal. The fastener can therefore be pre-fitted on the structure, the structure being located between the head and the bead of the fastener to prevent the fastener falling from the orifice.

A design of a fastener in which at least the portion forming the seal consists of a plastics material is preferred. The fastener can also consist totally of a plastics material. If this is the case, it is proposed according to a further advantageous development that the portion of the shank forming the seal consist of a softer plastics material than the remainder of the shank.

In a further preferred embodiment of the fastener, the portion of the shank forming the seal is moulded on the remainder of the shank by the injection of two components.

To simplify fitting and production of a fastener, it is preferred that the fastener be rotationally symmetrical with respect to a longitudinal axis.

A preferred embodiment of a fastener will now be described with reference to the accompanying drawings, in which
Figure 1 is a front view of a fastener;
Figure 2 is a plan view of a fastener, and
Figure 3 shows the fastener with a component on a structure.

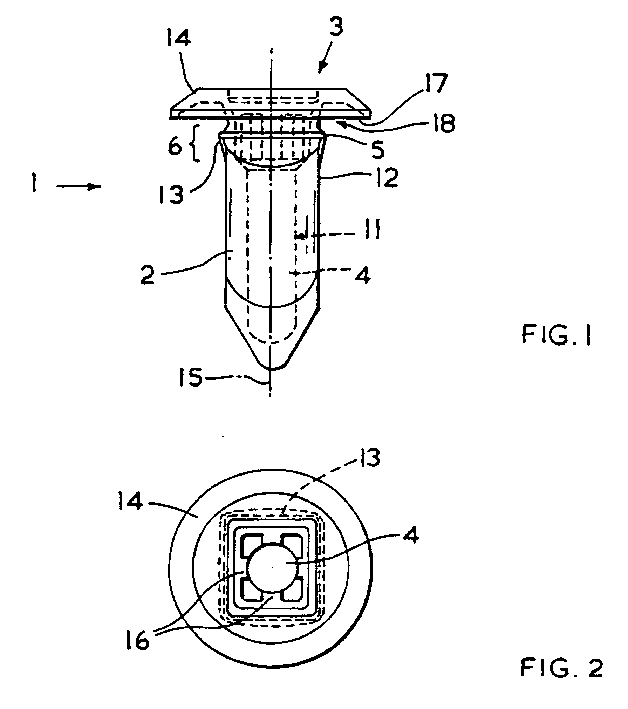

Figure 1 is a front view of a fastener 1. The fastener 1 has a shank 2 which extends in the longitudinal direction of a longitudinal axis 15. The outer contour of the shank 2 is substantially rectangular as viewed transversely to the longitudinal axis 15. Other external contours of the shank 2 are possible. The shank 2 preferably has a substantially circular cross section.

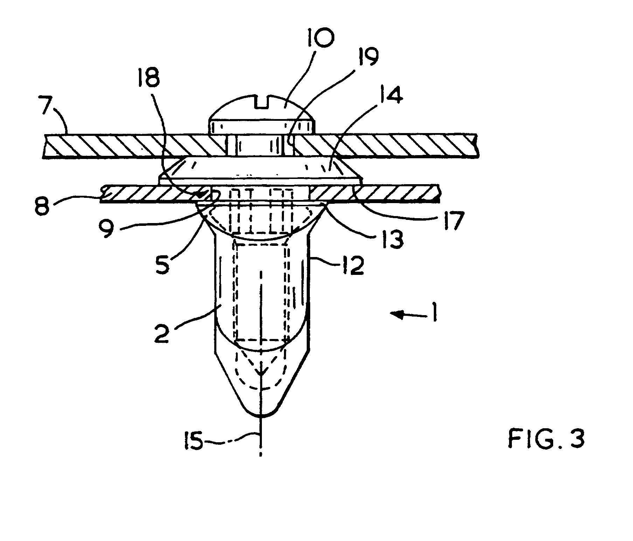

A socket 4 extends from one end face 3 in the longitudinal direction of the shank 2. The socket 4 has a substantially circular cross section. A fastening element 10 can be introduced into the socket 4, as shown in Figure 3.

The shank 2 has an elastically deformable portion 6. The portion 6 of the shank 2 is formed adjacent to the end face 3. The elastically deformable portion 6 forms a seal 5.

On the external surface 12 of the shank 2, a peripheral bead 13 is formed in the portion 6 forming the seal 5. The bead 13 and the shank 2 are formed in one part. The fastener 1 shown in Figures 1 to 3 is produced from a plastics material.

The socket 4 has a free cross section in the region of the at least elastically deformable portion 6 which is greater than in the following longitudinal portion 11 of the socket 4.

The shank 2 has a head 14 which is spaced from the elastically deformable portion 6. An engagement region 18 in which the structure 8 engages, as shown in Figure 3, is formed between the bead 13 and a face 17 of the head 14 adjacent to the bead 13. The head 14 forms the end face 3. Catch projections 16 which extend radially inwards from a surface of the socket 4, as shown in Figure 2, are formed in the region of the head 14 through which the socket 4 also extends.

Figure 3 shows a fastener in conjunction with a component 7 and a structure 8. For fixing the component 7 on the structure 8, the shank 2 of the fastener 1 is guided through an orifice 9 in the structure 8. The structure 8 comes to rest between the face 17 of the head 14 and the bead 13 within the engagement region 18. A component 7, which can be, for example, a fastening strip is placed on the head 14. This component 7 has a through-bore 19 through which a fastening element 10 extends. The fastening element 10, which can be, for example, a screw, is screwed into the socket 4 of the fastening member 1. A force which acts in the direction of the structure 8 and by means of which the elastic deformable portion 6 is deformed so as to form a seal 5 is thus produced in the shank 2 and therefore on the elastically deformable portion 6. The seal 5 surrounds the orifice 9. The seal 5 prevents a liquid from penetrating through the orifice 9.

The edge of the head 14 can additionally be designed with a sealing lip so a seal is formed on either side of the structure 8 in each case.

The fastener preferably consists of a plastics material. In particular, the portion 6 of the shank 2 forming the seal 5 is produced from a softer plastics material than the remainder of the shank 2. The portion 6 of the shank 2 forming the seal 5 is preferably moulded on the remainder of the shank 2 by the injection of two components. Owing to the design of the bead 13, it is possible also to use the fastener for sealing orifices of which the cross section does not necessarily coincide with the cross section of the shank 2.

## Claims

1. Fastener (1) of plastics material for fastening components (7) on a structure (8), the fastener (1) comprising:
an end face (3);
a shank (2) having a socket (4) which extends from the end face (3) in the longitudinal direction of the shank (2), and which is adapted to receive a fastening element (10) extending into the socket (4); and
a seal (5) surrounding the shank (2) and being formed by at least one portion (6) of the shank (2) adjacent to the end face (3);
wherein the shank (2) has an engagement region (18) adapted to be located in an orifice (9) formed in the structure (8), and at least one elastically deformable portion (6), **characterised in that** the shank (2) has a peripheral bead (13) on its external surface (12) and in the elastically deformable portion (6) forming the seal (5), the engagement region (18) being formed between the bead (13) and the end face (3), wherein by means of a force which acts in the direction of the engagement region (18) the elastically deformable portion (6) is elastically deformable at least to such an extent that it forms the seal (5) which faces toward the end face (3) and surrounds the shank (2).

2. A fastener (1) as claimed in claim 1, **characterised in that** the free cross section is greater in the elastically deformable portion (6) forming the seal (5) than in the following longitudinal portion (11) of the socket (4), as viewed in the longitudinal direction of the socket (4).

3. A fastener (1) as claimed in either of claims 1 or 2, **characterised in that** the bead (13) is moulded on the shank (2).

4. A fastener (1) as claimed in any one of claims 1, 2 or 3, **characterised in that** the bead (13) and the shank (2) are formed as one component.

5. A fastener (1) as claimed in any one of claims 1 to 4, **characterised in that** the end face (3) is formed at least in part by a head (14) spaced from the seal (5).

6. A fastener (1) as claimed in claim 5, **characterised in that** the head (14) has a cross-sectional area which is greater than that of the seal (5).

7. A fastener (1) as claimed in any one of claims 1 to 6, **characterised in that** at least the elastically deformable portion (6) consists of a plastics material.

8. A fastener (1) as claimed in claim 7, **characterised in that** the elastically deformable portion (6) of the shank (2) forming the seal (5) consists of a softer plastics material than the remainder of the shank (2).

9. A fastener (1) as claimed in claim 8, **characterised in that** the elastically deformable portion (6) of the shank (2) forming the seal (5) is moulded on the remainder of the shank (2) by the injection of two components.

10. A fastener (1) as claimed in any one of claims 1 to 9, **characterised in that** it is rotationally symmetrical with respect to a longitudinal axis (15).

11. A fastener (1) as claimed in any one of the previous claims, wherein the fastening element (10) is a screw and the elastically deformable portion (6) is deformed by a force produced in the shank (2) acting in the direction of the structure (8) when the screw is screwed into the socket (4).

## Patentansprüche

1. Befestigungsmittel (1) aus Kunststoff zur Befestigung von Bauteilen (7) an einer Struktur (8), wobei das Befestigungsmittel (1) umfasst:
eine Stirnfläche (3);
einen Schaft (2) mit einer Aufnahme (4), die sich von der Stirnfläche (3) aus in Längsrichtung des Schaftes (2) erstreckt und zur Aufnahme eines sich in die Aufnahme (4) erstreckenden Befestigungselementes (10) ausgebildet ist; und
eine den Schaft (2) umgebende Dichtung (5), die durch wenigstens einen der Stirnfläche (3) benachbarten Abschnitt (6) des Schaftes (2) gebildet ist;
wobei der Schaft (2) einen Eingriffsbereich (18), der in einer in der Struktur (8) ausgebildeten Öffnung (9) festlegbar ist, und wenigstens einen elastisch deformierbaren Abschnitt (6) aufweist, **dadurch gekennzeichnet, dass** der Schaft (2) an seiner äußeren Mantelfläche (12) und in dem die Dichtung (5) bildenden elastisch deformierbaren Abschnitt (6) einen umlaufenden Wulst (13) aufweist, wobei der Eingriffsbereich (18) zwischen dem Wulst (13) und der Stirnfläche (3) ausgebildet ist, wobei mittels einer in Richtung des Eingriffsbereichs (18) wirkenden Kraft der elastisch deformierbare Abschnitt (6) wenigstens soweit elastisch deformierbar ist, dass er die der Stirnfläche (3) zugewandte und den Schaft (2) umgebende Dichtung (5) bildet.

2. Befestigungsmittel (1) nach Anspruch 1, **dadurch gekennzeichnet, dass**, in Längsrichtung der Aufnahme (4) betrachtet, der freie Querschnitt in dem die Dichtung (5) bildenden elastisch deformierbaren Abschnitt (6) größer ist als in dem folgenden Längsabschnitt (11) der Aufnahme (4).

3. Befestigungsmittel (1) nach einem der Ansprüche 1 oder 2, **dadurch gekennzeichnet, dass** der Wulst (13) an dem Schaft (2) angeformt ist.

4. Befestigungsmittel (1) nach einem der Ansprüche 1, 2 oder 3, **dadurch gekennzeichnet, dass** der Wulst (13) und der Schaft (2) einteilig ausgebildet sind.

5. Befestigungsmittel (1) nach einem der Ansprüche 1 bis 4, **dadurch gekennzeichnet, dass** die Stirnfläche (3) wenigstens teilweise durch einen zu der Dichtung (5) beabstandeten Kopf (14) gebildet ist.

6. Befestigungsmittel (1) nach Anspruch 5, **dadurch gekennzeichnet, dass** der Kopf (14) eine gegenüber der Dichtung (5) größere Querschnittsfläche aufweist.

7. Befestigungsmittel (1) nach einem der Ansprüche 1 bis 6, **dadurch gekennzeichnet, dass** wenigstens der elastisch deformierbare Abschnitt (6) aus einem Kunststoff besteht.

8. Befestigungsmittel (1) nach Anspruch 7, **dadurch gekennzeichnet, dass** der die Dichtung (5) bildende elastisch deformierbare Abschnitt (6) des Schaftes (2) aus einem weicheren Kunststoff besteht als der restliche Teil des Schaftes (2).

9. Befestigungsmittel (1) nach Anspruch 8, **dadurch gekennzeichnet, dass** der die Dichtung (5) bildende elastisch deformierbare Abschnitt (6) des Schaftes (2) nach dem Zweikomponenten-Spritzverfahren an den restlichen Teil des Schaftes (2) angeformt ist.

10. Befestigungsmittel (1) nach einem der Ansprüche 1 bis 9, **dadurch gekennzeichnet, dass** dieses rotationssymmetrisch bezüglich einer Längsachse (15) ist.

11. Befestigungsmittel (1) nach einem der vorhergehenden Ansprüche, wobei das Befestigungselement (10) eine Schraube ist und der elastisch deformierbare Abschnitt (6) durch eine in dem Schaft (2) erzeugte Kraft deformiert wird, die bei Einschrauben der Schraube in die Aufnahme (4) in Richtung der Struktur (8) wirkt.

## Revendications

1. Attache (1) constituée de matière plastique pour fixer des composants (7) sur une structure (8), l'attache (1) comprenant :
une face d'extrémité (3) ;
une tige (2) comportant une douille (4) qui s'étend à partir de la face d'extrémité (3) dans la direction longitudinale de la tige (2), et qui est conçue pour recevoir un élément de fixation (10) s'étendant dans la douille (4) ; et
un joint d'étanchéité (5) entourant la tige (2), et constitué d'au moins une portion (6) de la tige (2) adjacente à la face d'extrémité (3) ;
dans lequel la tige (2) comporte une région de prise (18) conçue pour être située dans un orifice (9) ménagé dans la structure (8), et au moins une portion déformable élastiquement (6), **caractérisée en ce que** la tige (2) comporte une moulure (13) périphérique sur sa surface externe (12) et dans la portion déformable élastiquement (6) qui forme le joint d'étanchéité (5), la région de prise (18) étant formée entre la moulure (13) et la face d'extrémité (3), dans laquelle, à l'aide d'une force qui s'exerce dans la direction de la région de prise (18), la portion déformable élastiquement (6) peut se déformer de manière élastique au moins dans une mesure telle qu'elle forme le joint d'étanchéité (5) orienté vers la face d'extrémité (3) et entourant la tige (2).

2. Attache (1) selon la revendication 1, **caractérisé en ce que** la section transversale libre est plus grande dans la portion déformable élastiquement (6) formant le joint d'étanchéité (5) que dans la portion longitudinale (11) suivante de la douille (4), comme on le voit dans la direction longitudinale de la douille (4).

3. Attache (1) selon l'une quelconque des revendications 1 ou 2, **caractérisée en ce que** la moulure (13) est moulée sur la tige (2).

4. Attache selon l'une quelconque des revendications 1, 2 ou 3, **caractérisée en ce que** la moulure (13) et la tige (2) forment un seul composant.

5. Attache (1) selon l'une quelconque des revendications 1 à 4, **caractérisée en ce que** la face d'extrémité (3) est constituée au moins en partie par une tête (14) espacée du joint d'étanchéité (5).

6. Attache (1) selon la revendication 5, **caractérisée en ce que** la tête (14) présente une AIRE en coupe transversale qui est supérieure à celle du joint d'étanchéité (5).

7. Attache (1) selon l'une quelconque des revendications 1 à 6, **caractérisée en ce que** la portion déformable élastiquement (6) est constituée d'une matière plastique.

8. Attache (1) selon la revendication 7, **caractérisée en ce que** la portion déformable élastiquement (6) de la tige (2) formant le joint d'étanchéité (5) est constituée d'une matière plastique plus molle que le reste de la tige (2).

9. Attache (1) selon la revendication 8, **caractérisée en ce que** la portion déformable élastiquement (6) de la tige (2) formant le joint d'étanchéité (5) est moulée sur le reste de la tige (2) par injection de deux composants.

10. Attache (1) selon l'une quelconque des revendications 1 à 9, **caractérisée en ce qu'**elle est symétrique en rotation par rapport à un axe longitudinal (15).

11. Attache (1) selon l'une quelconque des revendications précédentes, dans laquelle l'élément de fixation (10) est une vis et la portion déformable élastiquement (6) est déformée par une force produite dans la tige (2), s'exerçant dans la direction de la structure (8) quand la vis est vissée dans la douille (4).
